# EUROPÄISCHE PATENTSCHRIFT

(11) **EP 0 849 541 B1**
(45) Veröffentlichungstag und Bekanntmachung des Hinweises auf die Patenterteilung: **26.09.2001**
(21) Anmeldenummer: 97122157.7
(22) Anmeldetag: 16.12.1997
(51) Int. Cl.: F24D 3/16

(54) **Deckenelement für eine Heiz- und Kühldecke**
Ceiling element for heating or cooling ceiling
Elément de plafond pour chauffage ou refroidissement par le plafond

(30) Priorität: 20.12.1996 CH 315596
(43) Veröffentlichungstag der Anmeldung: 24.06.1998
(73) Patentinhaber: BARCOL-AIR AG, 8712 Stäfa (CH)
(72) Erfinder: Sokolean, Helmuth, 8713 Uerikon (CH)
(74) Vertreter: Wagner, Wolfgang, Dr. Phil., Dipl.-Phys.

(56) Entgegenhaltungen:
- DE-U- 9 401 030
- FR-A- 2 712 380
- GB-A- 2 152 970

## Beschreibung

Die Erfindung betrifft ein Deckenelement für eine Heiz- und Kühldecke.

Es sind verschiedene Ausführungen von Deckenelementen bekannt, die für Heizdecken und Kühldecken, sowie Decken, die sowohl zum Heizen als auch zum Kühlen bestimmt sind, verwendet werden können. Einige solcher Ausführungen sind beschrieben in H. Sokolean: "Kühldeckentechnologie zur Erreichung des bestmöglichen Raumkomforts", Architektur und Technik 8/92, S. 49 - 53, B+L Verlags AG, Schlieren (Schweiz).

Eines der Grundprobleme bei der Konstruktion derartiger Deckenelemente liegt darin, dass es einerseits erwünscht ist, auch mit verhältnismässig kleinen Elementen eine möglichst hohe Kühlleistung zu erreichen, dass dabei aber die Behaglichkeit im klimatisierten Raum nicht gestört werden darf. Heiz- und Kühldecken bieten dafür an sich günstige Voraussetzungen, da ein Grossteil des Wärmeaustauschs zwischen den Deckenelementen und dem Raum über Strahlung erfolgt, was keine unmittelbare Beeinträchtigung der Behaglichkeit verursacht. Sollen jedoch hohe Kühlleistungen erzielt werden, so müssen die Deckenelemente so ausgelegt und angeordnet werden, dass auch Wärmeaustausch durch Konvektion stattfindet.

Bei herkömmlichen Deckenelementen wie z. B. dem aus DE-U-94 01 030 bekannten gefährdet der konvektive Austausch jedoch die Behaglichkeit im klimatisierten Raum, da sich leicht Kaltluftansammlungen in der unmittelbaren Umgebung der Deckenelemente bilden, die sich dann in unregelmässigen Schüben entladen, so dass verhältnismässig starke Strömungen entstehen, die gleichzeitig Temperaturschwankungen nach sich ziehen. Bekanntlich ist es jedoch für die Behaglichkeit im Raum entscheidend, dass die Strömungsgeschwindigkeit gewisse Grenzwerte nicht oder nur während eines geringen Zeitanteils überschreitet. Diese Erkenntnisse haben sich auch in entsprechenden Normen niedergeschlagen.

Es wurde gefunden, dass die Ausgestaltung von Deckenelementen mit dem im Kennzeichnenden Teil von Anspruch 1 angegebenen Merkmalen die Ausbildung stabiler Strömungsmuster begünstigt. Die von der unmittelbaren Umgebung des Deckenelements ausgehende konvektive Strömung schwankt zeitlich nur wenig. Sie verteilt sich räumlich unmittelbar unterhalb des Deckenelements und beruhigt sich dabei. Es treten keine unerwünschten Kaltluftschübe auf und die Strömungsgeschwindigkeiten bleiben auch bei hoher Kühlleistung sehr niedrig, insbesondere liegen sie unter den Grenzwerten, welche die üblichen Normen zulassen.

Dies gestattet die Erzielung hoher Kühlleistungen auch mit kleinen, mit Abstand angeordneten Deckenelementen, ohne dass hohe Strömungsgeschwindigkeiten aufträten und die Behaglichkeit im klimatisierten Raum gefährdet würde.

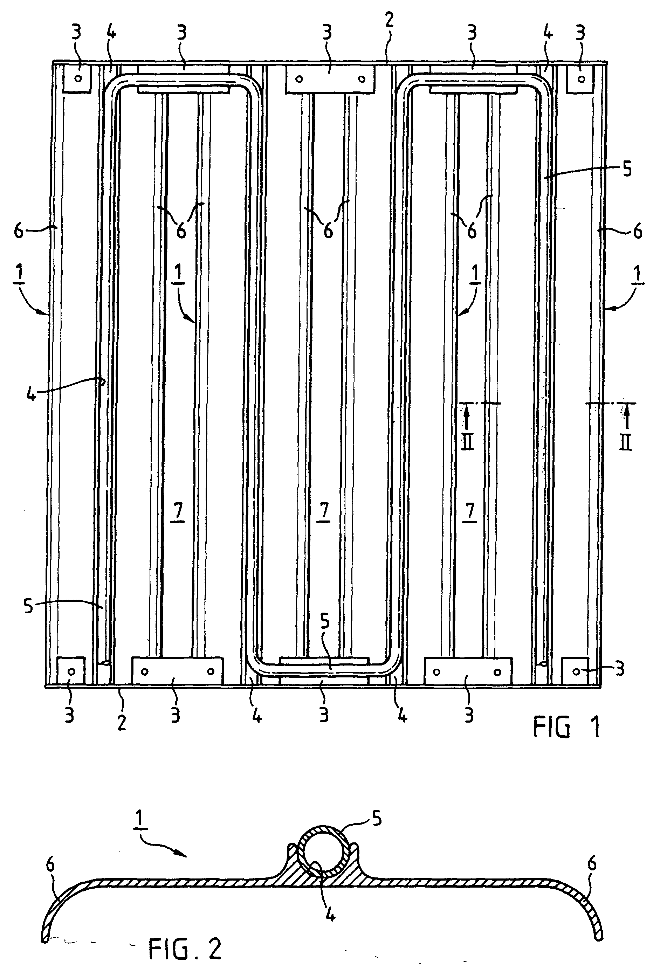

Im folgenden wird die Erfindung anhand von Figuren, welche lediglich ein Ausführungsbeispiel darstellen, näher erläutert. Es zeigen
- Fig. 1: eine Draufsicht auf ein erfindungsgemässes Deckenelement und
- Fig. 2: einen Querschnitt durch einen Teil des erfindungsgemässen Deckenelements, entsprechend II-II in Fig. 1.

Das erfindungsgemässe Deckenelement besteht aus mehreren parallelen, mit Abstand nebeneinander angeordneten gleichartigen Klimaplatten 1, welche durch an den Stirnenden der Klimaplatten 1 querverlaufende Stege 2 verbunden sind. Die Stege 2 tragen nach innen abstehende Flansche 3, welche mit den Klimaplatten 1 vernietet sind.

Jede Klimaplatte 1 ist aus Aluminium extrudiert und weist über ihre ganze Länge konstanten Querschnitt auf. An der Oberseite trägt sie mittig eine durch zwei parallele Stege begrenzte Längsnut 4 von rundem Querschnitt, welche als Führung für ein in dieselbe eingeschnapptes Rohr 5, vorzugsweise aus Kupfer, zum Transport eines Wärmetransportmediums wie z. B. Sole dient. Im übrigen ist die Klimaplatte 1 als verhältnismässig dünne, vorzugsweise ca. 1,5 mm dicke rechteckige Platte ausgebildet, deren Oberseite in den Randbereichen in runde, nach unten abbiegende Schultern 6 übergeht. Ihr Querschnitt folgt einem Viertelkreis von ca. 15 mm Radius, d. h. sie sind so weit abgebogen, dass sie unmittelbar am Rand der Klimaplatte 1 vertikal nach unten weisen. Die Aussenseiten der die Längsnut 4 begrenzenden Stege gehen über einen konkaven Abschnitt ebenfalls glatt in den anschliessenden Bereich der Oberseite der Klimaplatte 1 über. Die Breite der Klimaplatte 1 beträgt ca. 120 mm.

Das Rohr 5 ist mäanderartig durch die Längsnuten 4 aller Klimaplatten 1 durchgezogen. Am Ende einer Klimaplatte 1 ist es jeweils nach oben aus der Längsnut 4 herausgeführt, rechtwinklig abgebogen und verläuft quer bis zur Mitte der benachbarten Klimaplatte 1, wo es nochmals rechtwinklig abgebogen und schräg nach unten in deren Längsnut 4 gezogen ist. Die freien Enden des Rohrs 5 sind natürlich ebenfalls aus den Längsnuten 4 herausgeführt und liegen frei zum Anschluss einer Zuleitung und einer Ableitung. Das gesamte Deckenelement ist lackiert, eloxiert oder pulverbeschichtet.

Der Abstand zwischen den Seitenrändern zweier benachbarter Klimaplatten 1 beträgt ca. 17 mm. Die besagten Seitenränder bilden also Luftschlitze 7 von 17 mm Breite, durch welche die an den Oberseiten der Klimaplatten abgekühlte Luft nach unten strömen kann. Durch die konvex gerundete Ausbildung der Randbereiche der Oberseiten bildet sich dort eine stabile langsame Strömung aus, welche sich unterhalb des Deckenelements rasch kleinräumig auflöst. Die Ausbildung von Kaltluftansammlungen, die sich schubweise entladen und verhältnismässig geschlossen in tiefere Schichten des klimatisierten Raums eindringen, wird dadurch verhindert.

Selbstverständlich wird diese Wirkung nicht nur dann erzielt, wenn die Ausbildung des Deckenelements genau dem geschilderten Ausführungsbeispiel folgt. Es sind verschiedene Abweichungen möglich, ohne dass eine wesentliche Beeinträchtigung einträte. So kann z. B. die Oberseite der Klimaplatte über deren ganze Breite konvex gewölbt sein. Entscheidend ist die Ausbildung der Randbereiche als nach unten abbiegende Schultern, d. h. als Bereiche, deren konvexe Krümmung quer zur Längsrichtung grösser ist als diejenige des gegen die Mitte der Klimaplatte hin anschliessenden Bereichs. Die Schultern sind vorzugsweise so weit abgebogen, dass sie unmittelbar am Rand mindestens annähernd vertikal nach unten weisen. Der Krümmungsradius im Bereich der Schultern sollte vorzugsweise nicht grösser als 20 mm sein. Er braucht nicht konstant zu sein.

Auch die Breite der Klimaplatten kann von dem angegebenen Wert mehr oder weniger stark abweichen. Günstig sind Breiten zwischen 100 mm und 150 mm. Aehnliches gilt für die Breite der zwischen den Rändern benachbarter Platten gebildeten Luftschlitze, die vorzugsweise zwischen 10 mm und 20 mm liegt. Die Breite der Luftschlitze sollte vorzugsweise zwischen 10% und 20% der Breite der Klimaplatten betragen. Die Klimaplatten sind vorzugsweise horizontal und auf gleicher Höhe angeordnet, doch sind andere Anordnungen - z. B. abwechselnd auf leicht unterschiedlichen Höhen und eventuell um die jeweilige Längsachse leicht geneigt - nicht ausgeschlossen. Schliesslich können die Klimaplatten auch gelocht und an der Oberseite mit einem Akustikvlies belegt sein.

Für die Anordnung erfindungsgemässer Deckenelemente im Raum gibt es verschiedene Möglichkeiten. Vorzugsweise sind sie etwas unterhalb einer Betondecke aufgehängt, so dass sie sowohl direkt als auch über die Decke mit dem darunterliegenden Raum und den Objekten in demselben durch Strahlung Wärme austauschen und ausserdem bei Bedarf eine starke zusätzliche Kühlung durch Konvektion bewirken. Dabei kann auf eine Zwischendecke verzichtet werden oder es kann unterhalb der Deckenelemente eine gelochte Zwischendecke, z. B. mit einem Lochanteil zwischen 16 und 60% eingezogen werden. Daneben ist es auch möglich, erfindungsgemässe Deckenelemente unterhalb einer wie beschrieben oder anders ausgebildeten Zwischendecke aufzuhängen oder sie in die Zwischendecke einzusetzen derart, dass jedes Deckenelement ein Element oder mehrere Elemente derselben ersetzt.

## Patentansprüche

1. Deckenelement für eine Heiz- und Kühldecke, mit mindestens einer länglichen, im Betrieb horizontalen Klimaplatte (1) mit einer Führung für ein Heiz- oder Kühlmedium, **dadurch gekennzeichnet, dass** die Oberseite der Klimaplatte (1) an beiden Seitenrändern durch nach unten abbiegende runde Schultern (6) berandet ist.

2. Deckenelement nach Anspruch 1, **dadurch gekennzeichnet, dass** die Schultern (6) unmittelbar am Rand der Klimaplatte (1) mindestens annähernd vertikal abfallen.

3. Deckenelement nach Anspruch 1 oder 2, **dadurch gekennzeichnet, dass** die Schultern (6) quer zur Längsrichtung einen Krümmungsradius von höchstens 20 mm aufweisen.

4. Deckenelement nach einem der Ansprüche 1 bis 3, **dadurch gekennzeichnet, dass** die Oberseite der Klimaplatte (1) zwischen den Schultern (6) im wesentlichen eben ist.

5. Deckenelement nach einem der Ansprüche 1 bis 4, **dadurch gekennzeichnet, dass** die Führung an der Oberseite der Klimaplatte (1) angeordnet ist.

6. Deckenelement nach einem der Ansprüche 1 bis 5, **dadurch gekennzeichnet, dass** die Breite der Klimaplatte (1) zwischen 100 mm und 150 mm beträgt.

7. Deckenelement nach einem der Ansprüche 1 bis 6, **dadurch gekennzeichnet, dass** es mehrere parallele voneinander beabstandete Klimaplatten (1) aufweist.

8. Deckenelement nach Anspruch 7, **dadurch gekennzeichnet, dass** die Klimaplatten (1) auf gleicher Höhe nebeneinander angeordnet sind.

9. Deckenelment nach Anspruch 7 oder 8, **dadurch gekennzeichnet, dass** der seitliche Abstand zwischen benachbarten Klimaplatten (1) mindestens 10 mm beträgt.

10. Deckenelement nach einem der Ansprüche 7 bis 9, **dadurch gekennzeichnet, dass** der seitliche Abstand zwischen benachbarten Klimaplatten (1) höchstens 20 mm beträgt.

## Claims

1. Ceiling element for a heating and cooling ceiling, having at least one elongate horizontal air-conditioning panel (1) with a guide for a heating or cooling medium, **characterized in that** the top side of the air-conditioning panel (1) is bordered on both sides by round shoulders (6) which bend downwards.

2. Ceiling element according to Claim 1, **characterized in that,** directly at the border of the air-conditioning panel (1), the shoulders (6) drop down at least approximately vertically.

3. Ceiling element according to Claim 1 or 2, **characterized in that,** in the direction transverse to the longitudinal direction, the shoulders (6) have a radius of curvature of not more than 20 mm.

4. Ceiling element according to one of Claims 1 to 3, **characterized in that,** between the shoulders (6), the top side of the air-conditioning panel (1) is essentially planar.

5. Ceiling element according to one of Claims 1 to 4, **characterized in that** the guide is arranged on the top side of the air-conditioning panel (1).

6. Ceiling element according to one of Claims 1 to 5, **characterized in that** the width of the air-conditioning panel (1) is between 100 mm and 150 mm.

7. Ceiling element according to one of Claims 1 to 6, **characterized in that** it has a plurality of parallel air-conditioning panels (1) which are spaced apart from one another.

8. Ceiling element according to Claim 7, **characterized in that** the air-conditioning panels (1) are arranged one beside the other on the same level.

9. Ceiling element according to Claim 7 or 8, **characterized in that** the lateral distance between adjacent air-conditioning panels (1) is at least 10 mm.

10. Ceiling element according to one of Claims 7 to 9, **characterized in that** the lateral distance between adjacent air-conditioning panels (1) is not more than 20 mm.

## Revendications

1. Élément de plafond pour chauffage ou refroidissement par le plafond, avec au moins une plaque de climatisation (1) allongée, horizontale en fonctionnement, avec un guidage pour un fluide de chauffage ou de refroidissement, **caractérisé en ce que** la face supérieure de la plaque de climatisation (1) est bordée sur ses deux bords latéraux par des épaulements (6) ronds, repliés vers le bas.

2. Élément de plafond selon la revendication 1, **caractérisé en ce que** les épaulements (6) tombent au moins à peu près verticalement, directement au bord de la plaque de climatisation (1).

3. Élément de plafond selon la revendication 1 ou 2, **caractérisé en ce que** les épaulements (6) présentent, transversalement par rapport à la direction longitudinale, un rayon de courbure maximal de 20 mm.

4. Élément de plafond selon l'une des revendications 1 à 3, **caractérisé en ce que** la face supérieure de la plaque de climatisation (1) est sensiblement plane entre les épaulements (6).

5. Élément de plafond selon l'une des revendications 1 à 4, **caractérisé en ce que** le guidage est disposé sur la face supérieure de la plaque de climatisation (1).

6. Élément de plafond selon l'une des revendications 1 à 5, **caractérisé en ce que** la largeur de la plaque de climatisation (1) fait entre 100 mm et 150 mm.

7. Élément de plafond selon l'une des revendications 1 à 6, **caractérisé en ce qu**'il présente une pluralité de plaques de climatisation (1) parallèles et espacées les unes des autres.

8. Élément de plafond selon la revendication 7, **caractérisé en ce que** les plaques de climatisation (1) sont disposés les unes à côtés des autres au même niveau.

9. Élément de plafond selon la revendication 7 ou 8, **caractérisé en ce que** l'espacement latéral entre des plaques de climatisation (1) voisines est au minimum de 10 mm.

10. Élément de plafond selon l'une des revendications 7 à 9, **caractérisé en ce que** l'espacement latéral entre les plaques de climatisation (1) voisines est au maximum de 20 mm.
